# DEMANDE DE BREVET EUROPEEN

(11) **EP 1 645 471 A1**
(43) Date de publication de la demande: **12.04.2006**
(21) Numéro de dépôt: 05292081.6
(22) Date de dépôt: 06.10.2005
(51) Int. Cl.: B60R 5/04, B60R 7/02

(54) **Ensemble de rangement arrière de véhicule automobile et véhicule associé**

(30) Priorité: 07.10.2004 FR 0410604
(71) Demandeur: Peugeot Citroen Automobiles S.A., 78140 Vélizy Villacoublay (FR)
(72) Inventeur: Le Dall, Christophe, 92150 Suresnes (FR); Morando, Patrick, 06100 Nice (FR); Reichheld, Frédérick, 06190 Roquebrune Cap Martin (FR)
(74) Mandataire: Domenego, Bertrand

(57) **Abrégé**

Cet ensemble comprend une paroi (23) sensiblement verticale délimitant un volume intérieur (17) de rangement d'objets (77) et un organe (19C) de blocage en position d'un panneau (21) sensiblement vertical d'aménagement dudit volume intérieur (17). L'organe de blocage (19C) est déplaçable entre une position sensiblement escamotée dans la paroi (23) et une position active en saillie dans le volume intérieur (17).

Application aux coffres de véhicules automobiles.

## Description

La présente invention concerne un ensemble de rangement arrière de véhicule automobile, du type décrit dans le préambule de la revendication 1.

On connaît de WO-A-02/02 371 un ensemble de rangement du type précité, comprenant un panneau vertical de cloisonnement du coffre maintenu en position par des moyens de blocage.

Un tel ensemble ne donne pas entière satisfaction. En effet, pour maintenir ce panneau dans sa position verticale, les moyens de blocage comprennent des organes de fixation solidaires du panneau, et des rails verticaux fixés sur les flancs opposés délimitant le coffre pour y recevoir les organes de fixation, ce qui augmente le coût de l'ensemble de rangement.

Un but de l'invention est d'obtenir un ensemble de rangement arrière de véhicule automobile de coût et d'encombrement réduits, et qui préserve néanmoins les possibilités d'aménagement intérieur du coffre.

A cet effet, l'invention a pour objet un ensemble selon la revendication 1.

L'ensemble selon l'invention peut comprendre l'une ou plusieurs des caractéristiques qui font l'objet des revendications 2 à 9, prise(s) isolément ou suivant toutes combinaisons techniquement possibles.

L'invention a en outre pour objet un véhicule automobile selon la revendication 10.

Des exemples de réalisation de l'invention vont maintenant être décrits en regard des dessins annexés, sur lesquels :
- la figure 1 est une vue schématique, partielle et en perspective, de l'extrémité arrière d'un véhicule automobile selon l'invention, dans une première configuration d'aménagement intérieur ;
- la figure 2 est une vue en perspective d'un crochet pour un ensemble de rangement selon l'invention ;
- la figure 3 est une vue en perspective d'un logement de réception du crochet de la figure 2, ménagé dans l'ensemble de rangement selon l'invention ;
- la figure 4 est une vue en coupe, suivant le plan transversal IV-IV d'un détail de la figure 1, le crochet étant en position active ;
- la figure 5 est une vue analogue à la figure 4, le crochet étant en position escamotée, et
- la figure 6 est une vue analogue à la figure 1, dans une deuxième configuration d'aménagement intérieur de l'ensemble de rangement.

Dans tout ce qui suit, les orientations utilisées sont les orientations habituelles d'un véhicule automobile. Ainsi, les termes « avant », « arrière », « droit », « gauche », « haut », « bas », « supérieur » et « inférieur » s'entendent par rapport à la position d'un conducteur de véhicule automobile et à son sens de marche.

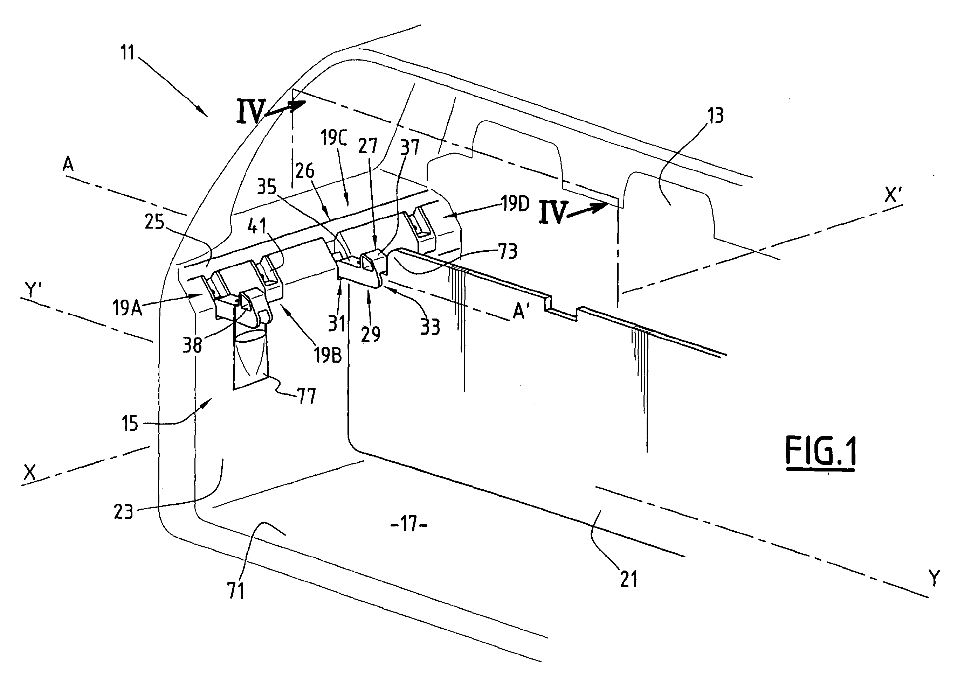

On a représenté sur la figure 1, la partie arrière 11 d'un véhicule automobile. Cette partie 11 comprend des sièges arrière 13 et des flancs latéraux 15 de la carrosserie délimitant le coffre arrière 17 du véhicule.

Pour simplifier le dessin, seul le flanc gauche 15 a été représenté sur la figure 1.

La partie arrière 11 comprend en outre des organes escamotables d'aménagement intérieur du coffre 17, formés par des crochets 19 montés dans les flancs 15, et un panneau vertical 21 de cloisonnement du coffre 17 engagé dans deux crochets 19 en regard, situés respectivement sur chacun des flancs 15.

Le coffre 17 est un espace de rangement délimité notamment par les sièges arrière 13, les flancs latéraux de la carrosserie 15 et par le hayon (non représenté) du véhicule.

Les flancs 15 du véhicule sont formés par des parois 23 sensiblement verticales qui présentent, dans leur partie supérieure 25, un épaulement dirigé vers l'extérieur.

Dans l'exemple illustré, chaque flanc 15 est muni, dans sa partie supérieure 25, de quatre crochets 19 répartis le long d'un axe longitudinal du véhicule.

Chaque crochet 19 du flanc gauche 15 est disposé en regard d'un crochet du flanc droit (non représenté), symétriquement par rapport au plan longitudinal médian du véhicule.

Comme on le décrira en détail plus bas, chaque crochet 19 est monté mobile dans un flanc 15 entre une position escamotée dans un logement 26 respectif ménagé dans le flanc 15 (crochets 19B et 19D) et une position active en saillie dans le coffre 17 (crochets 19A et 19C).

Chaque crochet 19 est d'une seule pièce et comprend une région supérieure 27 formant patère, une région inférieure 29 de blocage en position du panneau vertical 21, et une extrémité de pivotement 31 engagée dans logement 26.

La région formant patère 27 comprend, depuis l'extrémité de pivotement 31 vers l'extrémité libre 33 du crochet 19, une surface plane 35 d'appui et un bossage 37 qui fait saillie par rapport à la surface plane 35.

Le bossage 37 est traversé par une lumière 38 s'étendant suivant un axe parallèle à l'axe longitudinal X-X' du véhicule.

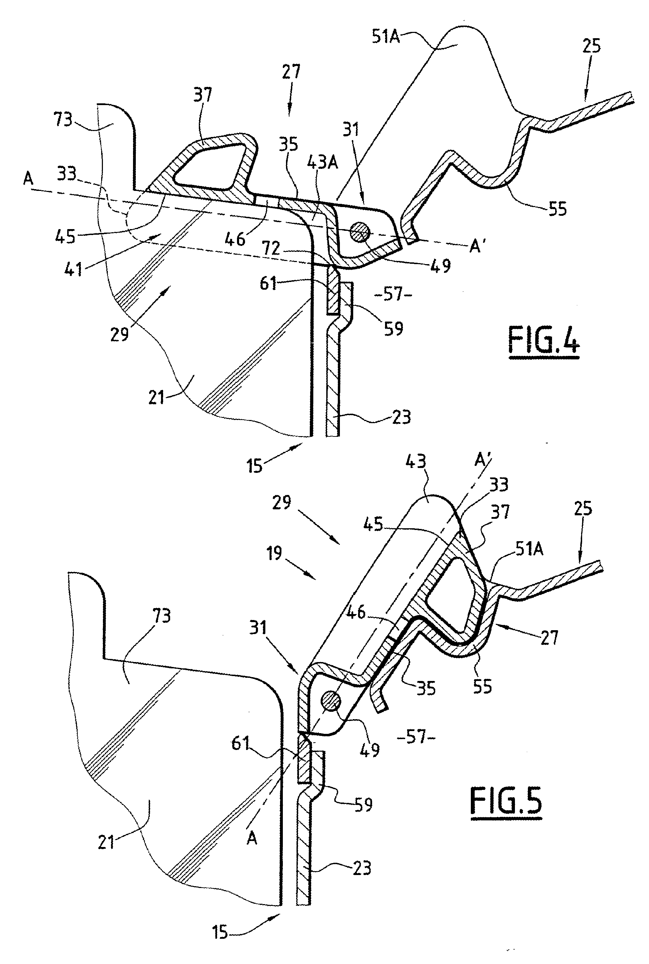

Comme illustré à la figure 4, dans laquelle le crochet 19 est dans sa position active, la région 29 de blocage du panneau 21 comprend une gorge inférieure 41 longitudinale délimitée par deux surfaces latérales 43A et 43B de blocage en translation du panneau 21 et par une surface supérieure 45 d'appui sur le panneau 21.

Les surfaces latérales 43A et 43B s'étendent sensiblement verticalement et la surface supérieure 45 est sensiblement orthogonale à ces surfaces latérales.

La surface supérieure 45 s'étend par ailleurs à l'opposé de la surface d'appui 35 de la région 27 formant patère. Dans la position active du crochet 19, les surfaces 35 et 45 s'étendent sensiblement horizontalement.

Un orifice 46 est ménagé entre les surfaces 35 et 45.

La gorge 41 délimitée par les surfaces 43A, 43B et 45 s'étend le long d'un axe longitudinal A-A' du crochet parallèle à un axe transversal Y-Y' du véhicule dans la position active du crochet 19. Elle débouche à l'extrémité libre 33 du crochet et se termine près de son extrémité de pivotement 31.

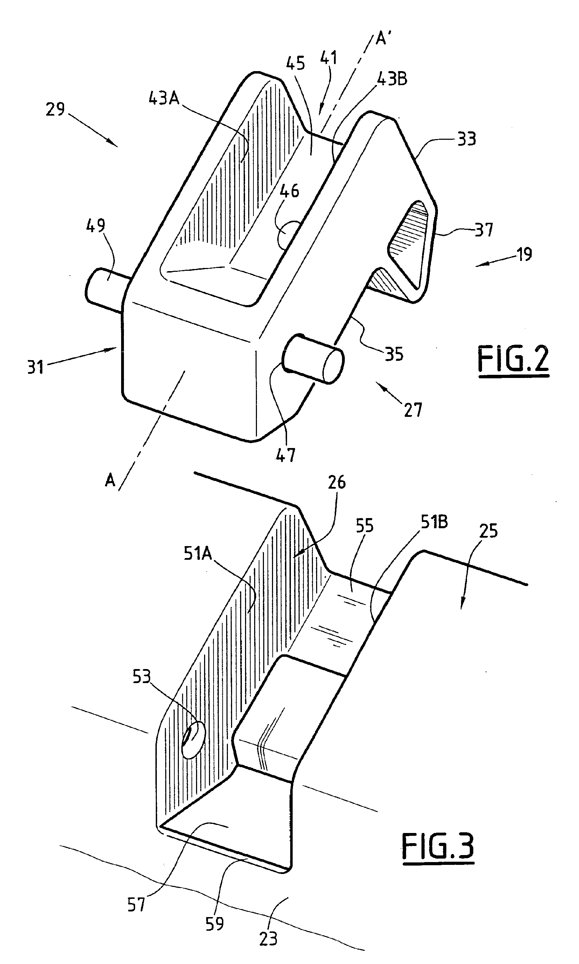

Comme illustré par la figure 2, l'extrémité 31 de pivotement comprend un orifice 47 de réception d'un pivot 49 d'articulation au flanc 15.

L'orifice 47 s'étend suivant un axe sensiblement horizontal, parallèlement à l'axe X-X'.

Comme illustré par les figures 3 et 5, chaque logement de réception 26 forme une encoche verticale dans le flanc 15, de forme complémentaire au crochet 19.

L'encoche est délimitée d'une part par deux faces latérales 51 A et 51 B munies, vers l'extrémité inférieure de l'encoche, de passages 53 de montage des extrémités du pivot 49, et d'autre part par un fond 55 de forme complémentaire à la région 27 formant patère.

Le logement 26 comprend en outre, dans sa région inférieure, une ouverture 57 qui permet le débattement de l'extrémité de pivotement 31 du crochet 19. Cette ouverture 57 est délimitée vers l'extérieur par le fond 55, et vers l'intérieur, par un bord supérieur 59 sensiblement horizontal de la paroi 23.

Comme représenté sur la figure 4, une butée 61 d'appui du crochet 15 en position active est rapportée sur le bord supérieur 59.

Comme précisé précédemment, le crochet 19 est articulé autour du pivot 49, entre la position escamotée dans le logement 26 représentée à la figure 5, et la position active en saillie dans le coffre 17, représentée à la figure 4.

Dans la position escamotée dans le logement 26, le contour du crochet 19 épouse celui du flanc 15. Le crochet 19 affleure ainsi la région périphérique de la paroi 23 délimitant le logement 26, de sorte qu'il ne fait pas saillie dans le coffre 17.

Dans cette position, la gorge de blocage 41 s'ouvre en regard du flanc opposé 15.

Par ailleurs, la région formant patère 27 s'appuie contre le fond 55 du logement 26, tandis que l'extrémité de pivotement 31 obture l'ouverture 57.

Dans la position active en saillie (figure 4), le crochet 19 fait saillie sensiblement horizontalement dans le coffre 17. Comme représenté sur la figure 4, la gorge 41 s'ouvre alors en regard du fond 71 du coffre. Le bossage 37 fait saillie vers le haut et, la surface plane 35 s'étend dans un plan horizontal.

Par ailleurs, comme illustré par la figure 4, les bords inférieurs 72 des surfaces 43A, 43B s'appuient sur la butée 61. L'extrémité de pivotement 31 est reçue dans l'ouverture 57, ce qui obture cette ouverture.

Dans l'exemple illustré par la figure 1, le panneau d'aménagement intérieur 21 est un panneau mobile qui est bloqué dans une position sensiblement verticale par le crochet 19C et par un crochet en regard sur le flanc droit.

Le panneau 21 s'étend continûment entre le flanc droit et le flanc gauche 15. Ses coins supérieur gauche 73 et droit présentent chacun une forme de gradin.

L'épaisseur du panneau 21 dans chaque coin 73, prise suivant l'axe longitudinal X-X', est sensiblement égale à la largeur de la gorge 41. Chaque coin 73 peut ainsi s'insérer dans une gorge 41 correspondante d'un crochet 19C en regard, comme représenté à la figure 1.

Le fonctionnement de l'ensemble arrière 11 selon l'invention va maintenant être décrit.

Dans le cas où un utilisateur du véhicule souhaite pendre un objet de rangement, comme par exemple un sac 77, il bascule un des crochets 19A depuis sa position escamotée vers sa position active et utilise le crochet 19A comme une patère, comme illustré par la figure 1.

Par ailleurs, s'il souhaite séparer le coffre en deux compartiments par un cloisonnement vertical, il dispose le panneau 21 vertical entre les flancs gauche et droit 15, en positionnant les coins 73 du panneau en regard de deux crochets 19C situés sur les flancs 15 respectifs. Puis, comme illustré par les figures 4 et 5, il bascule les crochets 19C correspondants depuis leur position escamotée vers leur position active. Lors de ce déplacement, les coins 73 respectifs du panneau 21 sont insérés dans les gorges 41 correspondantes des crochets 19C, jusqu'à ce que les surfaces supérieures 45 butent contre les coins 73 respectifs du panneau 21. Le panneau 21 est alors bloqué en position verticale par les crochets 41.

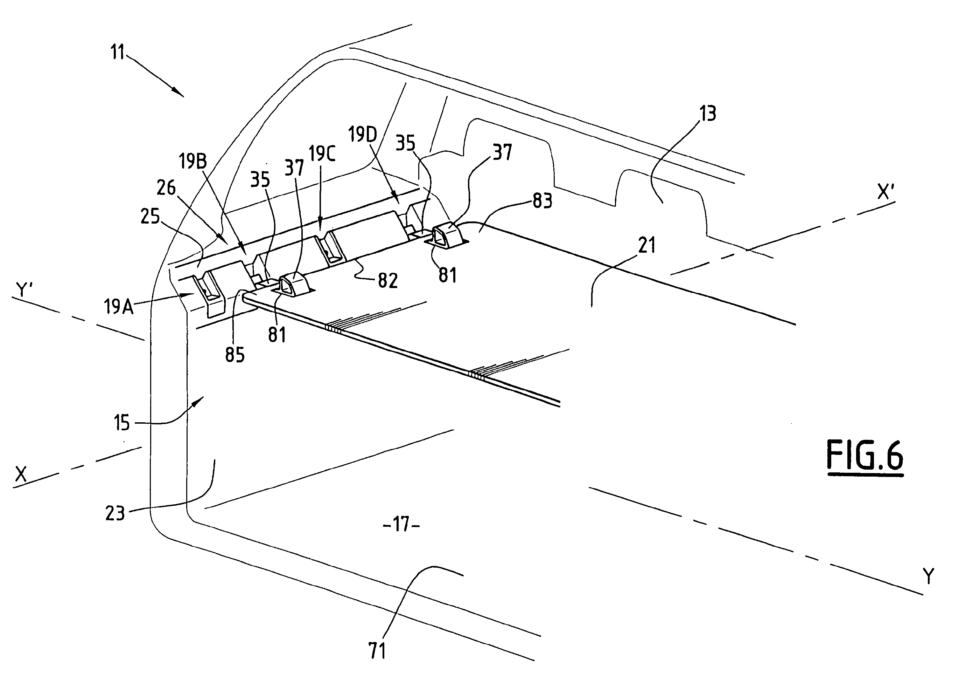

Dans une variante représentée sur la figure 6, deux lumières d'insertion 81 sont ménagées sur chaque coté 82 du panneau 21. Les lumières 81 s'étendent au voisinage des coins avant et arrière 83 et 85 du panneau. La distance qui sépare deux lumières 81 sur un côté du panneau est égale à la distance qui sépare deux crochets 19B, 19D du flanc en regard.

Par ailleurs, la section horizontale des lumières 81 correspond sensiblement à la section horizontale des bossages 37 de chaque crochet 19B, 19D.

Dans cette variante, le panneau 21 est disposé horizontalement dans le coffre 17, en appui sur les surfaces d'appui 35 de deux paires de crochets 19 opposées, les crochets 19 étant maintenus en position active. Le panneau 21 est bloqué en translation le long de l'axe X-X' par insertion des bossages 37 dans les lumières 81 correspondantes.

Dans une autre variante (non représentée), le panneau 21 est formé par un cadre comprenant un filet dans sa partie centrale.

Dans une autre variante (non représentée), les crochets 19 sont mobiles en translation le long d'un axe transversal entre leurs positions escamotées dans la paroi 23 et leurs positions en saillie dans le coffre 17.

Grâce à l'invention qui vient d'être décrite, il est possible de disposer, à moindre coût, d'un ensemble arrière 11 de rangement d'un véhicule automobile, délimitant un coffre 17 qui peut être cloisonné horizontalement et verticalement.

Les différentes possibilités d'aménagement intérieur de l'ensemble arrière 11 sont obtenues à moindre coût, et avec un encombrement réduit, grâce aux crochets 19 escamotables qui peuvent être utilisés soit comme patère, soit comme moyen de blocage en position verticale ou horizontale de panneaux d'aménagement 21 du coffre 17.

## Revendications

1. Ensemble (11) de rangement arrière de véhicule automobile, du type comprenant :
- au moins une paroi (23) sensiblement verticale délimitant au moins partiellement un volume intérieur (17) de rangement d'objets (77) ; et
- au moins un organe (19A ; 19B ; 19C ; 19D) de blocage comprenant des moyens (27) de blocage en position d'un panneau (21) sensiblement vertical d'aménagement dudit volume intérieur (17) ;
**caractérisé en ce que** l'organe de blocage (19A ; 19B ; 19C ; 19D) est déplaçable entre une position sensiblement escamotée dans la paroi (23) et une position active en saillie dans le volume intérieur (17).

2. Ensemble selon la revendication 1, **caractérisé en ce que** le ou chaque organe de blocage (19A ; 19B ; 19C ; 19D) est reçu dans un logement de réception (26) respectif dans sa position escamotée, le ou chaque logement de réception (26) étant ménagé dans la paroi (23).

3. Ensemble selon la revendication 2, **caractérisé en ce que**, dans sa position escamotée, le contour de l'organe de blocage (19A ; 19B ; 19C ; 19D) épouse le contour de la paroi (23) délimitant le logement (26).

4. Ensemble (11) selon la revendication 2 ou 3, **caractérisé en ce que**, dans sa position active, l'organe de blocage (19A ; 19B ; 19C ; 19D) s'appuie sur un bord (59) de la paroi (23) délimitant le logement (26).

5. Ensemble selon l'une quelconque des revendications précédentes, **caractérisé en ce que** les moyens de blocage (27) sont ménagés dans la région inférieure de l'organe de blocage (19A ; 19B ; 19C ; 19D) en position active de celui-ci.

6. Ensemble (11) selon l'une quelconque des revendications précédentes, **caractérisé en ce que** les moyens de blocage (27) comprennent une gorge (41) de réception d'une partie (73) du panneau (21), s'étendant le long d'un axe (A-A') longitudinal de l'organe de blocage (19A ; 19B ; 19C ; 19D).

7. Ensemble selon l'une quelconque des revendications précédentes, **caractérisé en ce que** l'organe de blocage (19A ; 19B ; 19C ; 19D) comprend une partie (27) formant patère dans sa position active.

8. Ensemble (11) selon la revendication 7, **caractérisé en ce que** la partie formant patère (27) comprend un bossage (37) de blocage en position d'un panneau (21) sensiblement horizontal d'aménagement intérieur dudit volume (17), le bossage (37) faisant saillie par rapport à une surface d'appui (35), la surface d'appui (35) étant sensiblement horizontale dans la position active de l'organe de blocage (19A ; 19B ; 19C ; 19D).

9. Ensemble (11) selon l'une quelconque des revendications précédentes, **caractérisé en ce que** la paroi (23) comprend au moins deux flancs latéraux (15) en regard, et **en ce que** l'ensemble comprend au moins deux organes de blocage (19A ; 19B ; 19C ; 19D) disposés en regard l'un de l'autre, respectivement sur l'un et l'autre des flancs (15).

10. Véhicule automobile, **caractérisé en ce qu'**il comprend au moins un ensemble (11) selon l'une quelconque des revendications précédentes.
